# EUROPEAN PATENT SPECIFICATION

(11) **EP 2 447 698 B1**
(45) Date of publication and mention of the grant of the patent: **07.01.2015**
(21) Application number: 11187523.3
(22) Date of filing: 02.11.2011
(51) Int. Cl.: G01N 1/20, B01F 15/00, B01F 5/10, B01F 5/02, B01F 3/08

(54) **A method and system for at least temporarily homogenizing a fluid flow in a pipeline**
Verfahren und System für mindestens eine vorübergehende Homogenisierung eines Flüssigkeitsstroms in einer Leitung
Procédé et système pour homogénéiser au moins temporairement un débit de fluide dans un pipeline

(30) Priority: 02.11.2010 NL 2005612
(43) Date of publication of application: 02.05.2012
(73) Proprietor: Kimman Process Solutions B.V., 3161 GN Rhoon (NL)
(72) Inventor: Verloop, Erik Michiel, 3034 ZL ROTTERDAM (NL); Verloop, Pieter Charles, 2517 XJ DEN HAAG (NL)
(74) Representative: EP&C

(56) References cited:
- EP-A1- 0 060 634
- EP-A1- 2 145 676
- EP-A2- 0 044 652
- EP-A2- 1 445 014
- DE-A1-102008 043 408
- FR-A- 1 060 468
- GB-A- 2 164 021
- GB-A- 2 357 710
- US-A1- 2008 074 944

## Description

The invention relates to a method and system for at least temporarily homogenizing a fluid flow in a pipeline, in particular for analyzing the fluid flows. Prior art methods and systems according to the preamble of claims 1 and 8 are for example disclosed in EP 0 060 634 A1 and EP 0 044 652 A2.

Transfer pipelines often contain multiple fluids which are typically mutually immiscible, when kept in rest. During transport the liquids ascertain a certain velocity and due to this velocity and friction, turbulence can occur and temporal mixing is possible. However in most cases, mixing is far from adequate and no homogeneity mixture can evolve from the throughput.

Analyzing devices and/or samplers are used to analyze the properties and/or composition of the transferred fluids. These analyzers and samplers often concentrate on a small cross-sectional area of the pipeline to determine the properties of this small area, as a representation of the total cross-sectional pipe area. To assure that this small area can be an accurate representation of the total pipeline, the composition variations of the fluids in the pipeline to be analysed should be as minimal as possible, i.e. the pipeline should be homogeneously mixed.

Mixing devices, such as static mixers and orifice plates, are often used to provide additional mixing, but are mainly dependent on the flow. More flow provides more mixing, lesser flow provides lesser mixing. But especially during lesser flows additional mixing is mostly required. In practice, especially during start-up and shut-down, flows become slow and stratification of liquids occurs.

In the oil industry, for example, this is a problem as water and oil, both immiscible and present in most vessels or tanks, are being transported to another vessel or tank. At the start-up the small quantities of water are transported first. Because the flow is still slow, the water is transported over the bottom of the pipeline, not detected by any analyzing device or sampler, often positioned in a center area of the pipeline.

Dynamic mixers have the advantage of mixing independent of the flow velocity but have often moving parts, which require maintenance and need an external power source.

Over the years, mixing specialists introduced nozzle mixers, where external flows are injected into the pipeline to provide enough mixing energy to mix the total pipeline content. Most of these nozzle mixers, for instance disclosed in patent publication GB 2 357 710 and NL 2001803, comprise a vertical placed pipe with directional mixing tubes or nozzles which provide mixing by agitating the total pipeline content. This method is effective, but requires a lot of energy to agitate the total pipeline content.

Other known methods and devices also have a limited mixing length and/or a low energy efficiency, resulting in inadequate mixing and/or a large power consumption.

The aim of the present invention is to provide a method and system for at least temporarily homogenizing a fluid without one or more of the mentioned drawbacks, or at least to provide an alternative therefor.

The invention provides a method according to claim 1.

According to the invention an eductor is used to provide at least temporarily a homogenized fluid flow over a cross section of the pipeline. This homogenizing of the fluid flow is ideally over substantially the whole cross section of the pipeline resulting in a substantially constant composition of the fluid flow over this cross section. As a result, a sample taken from the fluid flow at any location in the cross section is representative for the composition of the fluid flow over the whole cross section.

In practice, homogenization may not take place over the complete cross section, for example, due to boundary phenomenons. However, the method of the invention may lead to homogenization in a substantial part of the cross section, for example over at least 40 % of the cross section, preferably over at least 60 % of the cross section of the pipeline, therewith providing a relative even distribution of the contents of the pipeline over this substantial part. Within this substantial part a reliable measurement can be made or sample can be taken.

The use of an eductor has the advantage that relative little energy is required for sufficient mixing of the fluid flows to temporarily homogenize the fluid flows in the pipeline so that the contents of the pipeline can be reliably analyzed.

An eductor is a pump device which uses the Venturi effect to draw liquid into the eductor by the energy of a pressurized fluid flow through the eductor.

The eductor comprises a pressure inlet connected to a source of pressurized fluid, a suction inlet arranged in or connected to the bottom region. When pressurized liquid is fed to the pressure inlet of the eductor, fluid will be drawn in the suction inlet of the eductor. Since this suction inlet is arranged in or connected to the bottom region of the pipeline, liquid from the bottom region of the pipeline will be sucked into the eductor via the suction inlet.

It is remarked that the use of eductors for mixing of fluids in tanks is known. Such application is for example disclosed in EP 1 445 014.

In EP 1 445 014 an eductor is proposed to obtain a fluid circulation in the tank to avoid a build up of solid or semi solid materials upon the floor of the tank. To obtain optimal circulation in the tank the eductor is designed to form a concentrated jet which penetrates the tank contents as far as possible to obtain as much circulation as possible within the tank. Further, the suction inlet is relatively wide and arranged at an angle substantially perpendicular to the longitudinal axis of the eductor to suck in liquid from the side of the eductor to establish a fluid circulation in the tank.

In contrast, the eductor for a pipeline as presently proposed is aimed at mixing sucked in fluid from a bottom region of the pipeline with the other fluid in the eductor. This mixture should be distributed as quickly as possible over the cross section of the pipeline to at least temporarily homogenize the contents of a respective cross section of the fluid flow in order to analyze this contents or take a sample thereof.

In an embodiment, a longitudinal axis of the suction inlet is arranged at an angle with respect to a longitudinal axis of the outlet, wherein the angle is smaller than 40 degrees, preferably smaller than 20 degrees, for example in the range of 0-10 degrees.

Since the eductor is arranged in a pipeline through which a fluid flow runs, the eductor is not used to obtain circulation of the fluid, but to distribute a homogenized fluid flow over a substantial part of the cross section of the pipeline in order to analyze this fluid or to take a sample. Since the eductor is used in a fluid flow through the pipeline, it is advantageous to adapt the relative flow directions of the suction inlet and the outlet of the eductor to this situation. These flow directions may be arranged relatively parallel to each other, for instance by arranging the longitudinal axes of the suction inlet and the outlet at an angle of less than 40 degrees.

In an embodiment, a surface area of a smallest cross section of the eductor, also called the throat, is maximally 60%, for example about 50% of a surface area of the cross section of the outlet of the eductor. In the application of the present invention, the eductor does not have to provide a concentrated jet capable of circulating the fluid, since a fluid flow is already present. However, a quick distribution of the outlet flow over the cross section of the pipeline is advantageous. Therefore, the surface area of the outlet may be relatively large compared to the surface area of the throat. For example the surface area of the cross section of the throat may be maximally 60% of the surface area of the cross section of the outlet.

The eductor is arranged in the pipeline, in particular in the bottom region of the pipeline. The eductor directly takes in fluid from the bottom region of the pipeline, and no additional fluid connection has to be provided between the bottom region and the location of the eductor.

The outlet of the eductor is arranged in the pipeline such that an outflow direction of a fluid from the outlet is arranged at least partially parallel to a direction of the main flow in the pipeline. When the flow ejected from the eductor is at least partially parallel with the flow direction within the pipeline, dispersion of the mixture ejected from the eductor may be promoted. This dispersion increases the homogenization of the fluid flows in the pipeline.

The outflow direction of the outlet of the eductor is substantially directed to an analyzing device arranged in the pipeline or substantially directed to a conduit inlet arranged in the pipeline of a conduit fluidly connected to an analyzing device, or substantially directed to a location to take the sample. By direction of the fluids ejected from the eductor towards the analyzing device, the fluid flow which is used for analysis in the analyzing device is relative homogeneous, and therefore representative for the contents of the fluid flows in the pipeline.

As an alternative, which is not part of the invention the outlet of the eductor is arranged in the pipeline such that an outflow direction of a fluid from the outlet is arranged at least partially opposite to the main flow direction in the pipeline. In this embodiment the outflow of the eductor is directed at least partially opposite to the main flow in the pipeline. This may result in promotion of turbulent mixing of the outflow of the eductor and the other fluid flows in the pipeline.

In an embodiment, the injection fluid and the liquid from the bottom region of the pipeline are further mixed in the eductor by an additional mixing device. Mixing of the injection liquid, which is preferably taken from the pipeline, and the fluid sucked in from the bottom region of the pipeline may improve homogenization of the fluid flows in the pipeline. The additional mixing device may be a static mixing device, for instance provided in the pressure inlet or in the outlet of the eductor.

In an embodiment, the pressurized injection fluid is obtained by taking fluid from the pipeline, preferably a downstream region of the pipeline. This fluid may subsequently be pressurized by a pump and fed to the pressure inlet of the eductor. As an alternative another source of fluid may be provided to provide pressurized fluid.

In an embodiment, the main flow of the pipeline comprises at least a first fluid flow in the bottom region of the pipeline and a second fluid flow in a region above the bottom region of the pipeline, wherein a density of the first fluid flow is larger than a density of the second fluid flow, and wherein the suction inlet is arranged to suck in fluid mainly from the first fluid flow.

The invention further provides a system according to claim 8.

By providing this system, wherein use is made of an eductor relative little energy is required for sufficient mixing of the fluid flows to temporarily homogenize the fluid flows in the pipeline so that the contents of the pipeline can be reliably analyzed.

In an embodiment, a longitudinal axis of the suction inlet, in the flow direction, is arranged at an angle with respect to a longitudinal axis of the outlet, wherein the angle is smaller than 40 degrees, preferably in the range of 0 to 20 degrees.

In an embodiment, a surface area of a smallest cross section of the eductor, also called the throat, is maximally 60%, for example about 50% of a surface area of the cross section of the outlet of the eductor.

In an embodiment, the eductor comprises an additional mixing device to improve the mixing within the eductor.

In an embodiment, the source of pressurized injection fluid comprises a pressure pump having a pump inlet and a pump outlet, wherein the pump inlet is connected to the pipeline to take fluid from the pipeline, and wherein the pump outlet is connected to the pressure inlet of the eductor.

The outlet of the eductor is arranged in the pipeline such that an outflow direction of a fluid from the outlet is arranged at least partially parallel to a direction of the main flow in the pipeline.

The outflow direction of the outlet is substantially directed to an analyzing device arranged in the pipeline, or substantially directed to a conduit inlet arranged in the pipeline of a conduit fluidly connected to an analyzing device, or substantially directed to a location to take the sample.

The system comprises an analyzing device , wherein the analyzing device is configured for analyzing of the fluid flows in the pipeline.

Examples of embodiments of a system and method of the invention will now be described, whereby reference will be made to the appended drawings, wherein:
- Figure 1 shows schematically a side view of an embodiment of a system according to the invention;
- Figure 2 shows in more detail the eductor of Figure 1;
- Figure 3 shows a cross section of the pipeline of Figure 1; and
- Figure 4 shows schematically a side view of an embodiment of a system which is not part of the invention;

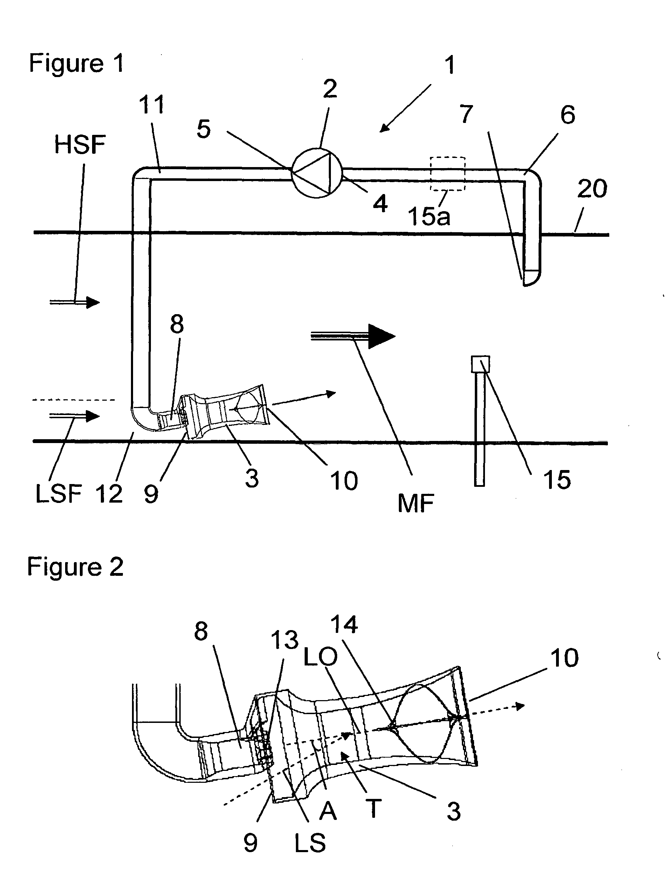

Figure 1 shows a system 1 for at least temporarily homogenizing fluid flows in a fluid pipeline 20 for analyzing the fluid flows in the pipeline 20 by an analyzing device 15.

Through the pipeline 20 a main fluid flow runs as indicated by an arrow MF. Upstream of the system 1 this main flow comprises two sub-flows a first sub flow LSF in a lower region of the pipeline 20 and a second sub flow HSF in regions of the pipeline above the lower region. The density of the fluid or fluids of the first fluid sub flow LSF is larger than the density of the fluid or fluids of the second fluid flow HSF resulting in the sub-flows. For instance, the lower sub-flow may mainly consist of water and the higher sub-flow may mainly consist of oil. Since water is heavier than oil, the water will mainly flow in a lower region of the pipeline 20 and the oil will mainly flow in the upper region of the pipeline. It is remarked that the lower and upper are used to indicate relative positions of the sub-flows LSF, HSF. The sub-flows can be stratified, intermittent or partially dispersed.

The main flow is for instance a flow of crude oil with a water percentage of 0.1 - 1 % through a pipeline such as a custody transfer line. The water may be present as bubbles in the crude oil flow, wherein the relative heavy bubbles will gradually sink to the bottom of the pipeline resulting in an uneven distribution of the contents of the fluid flow over the cross section of the pipeline.

The presence of the two sub-flows LSF, HSF, and the contents thereof results in an uneven distribution of the composition of the fluid flow over the cross section of the pipeline.

To analyze the composition of the main flow, it is of importance that the sub-flows LSF, HSF are at least temporarily mixed so that the composition of the fluid flow is substantially the same over the whole cross section of the pipeline. As a result, the fluid flow can reliably analyzed with the analyzing device 15. After the analyzing device 15 is passed, the main flow MF may again segregate into the two sub-flows LSF, HSF.

The system 1 comprises a pressure pump 2 and an eductor 3. The pump 2 comprises a pump inlet 4 and a pump outlet 5. The pump inlet 4 is connected with a first conduit 6 having a conduit inlet 7 arranged in the pipeline 20.

The eductor 3 comprises a pressure inlet 8, a suction inlet 9, and an outlet 10. The pressure inlet 8 is connected to the pump outlet 5 via the second conduit 11. The eductor 3 is arranged in a bottom region 12 of the pipeline 20, so that the suction inlet 9 is directly arranged in this bottom region 12 to suck in liquid from this bottom region 12. The advantage of arranging the suction inlet 12 in the bottom region of the pipeline 20 is that the relative heavy part of the fluid flows in the pipeline 20 is introduced in the eductor which relatively improves the temporarily mixing and therewith homogenizing of the fluid flows in the pipeline 20.

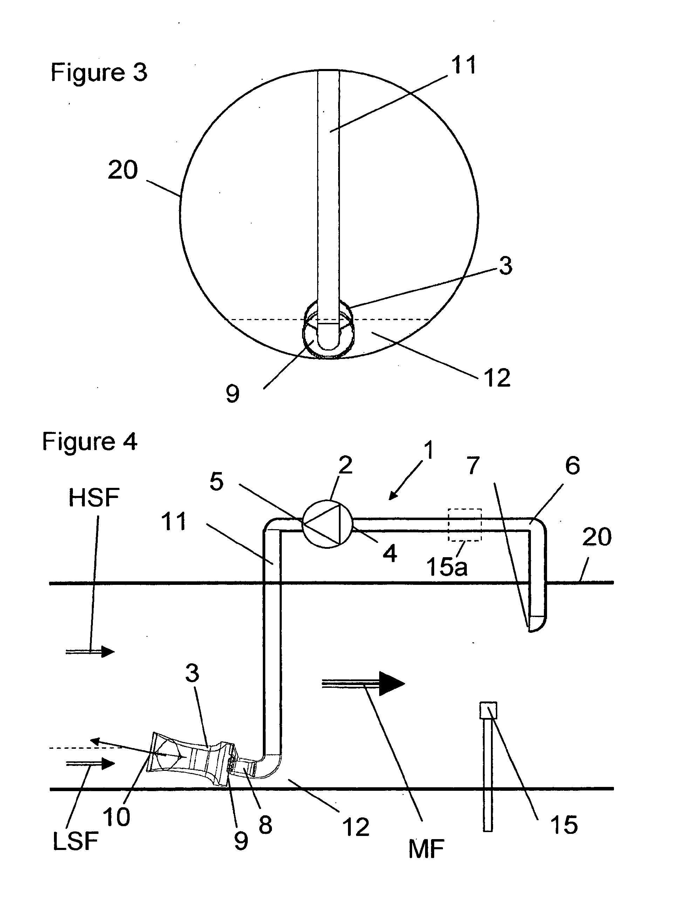

The eductor 3 is shown in more detail in Figure 2. Figure 3 shows a cross section 20 of the pipeline with the location of the eductor 3.

In Figure 2 the angle A between a longitudinal axis LS of the suction inlet 9 and a longitudinal axis LO of the outlet 10 is indicated. This angle A is relatively small so that the main flow direction of the flow in the suction inlet 9 and the main flow direction in the eductor towards the outlet 10 are also relatively parallel. This angle is for example smaller than 40 degrees, preferably in the range of 0 to 20 degrees.

Further, it is remarked that the surface area of a smallest cross section of the eductor, also called the throat T, is about 50% of the surface area of the cross section of the outlet 10 of the eductor.

During use the pressure pump provides pressurized fluid to the eductor 3. Due to the Venturi effect in the eductor 3 liquid from the bottom region 12 is drawn into the eductor 3 via the suction inlet 9. The injection liquid and the liquid sucked in from the bottom region 12 are thoroughly mixed in the eductor 3 and ejected from the outlet 10 into the pipeline 20.

To promote mixing of the injection liquid and the liquid sucked in from the bottom region 12, a first static mixing device 13 is arranged in the pressure inlet 8, and a second static mixing device 14 is arranged in the interior of the eductor 3 close to the outlet 10.

In the pipeline 20 the mixture ejected from the outlet 10 is further mixed with fluids in the pipeline, resulting in a homogenized flow in the pipeline 20. As a result, the analyzing device 15 can reliably analyze the contents of the fluid flow in the pipeline.

The outlet 10 of the eductor 3 is arranged in the pipeline 20 such that an outflow direction of a fluid ejected from the outlet 10 is arranged at least partially parallel to a direction of the main flow in the pipeline. This direction of the flow ejected from the outlet 10 promotes dispersion of the ejected flow in the main flow, therewith improving homogenization of the main flow MF.

Further, the outflow direction of the outlet 10 is substantially directed to an analyzing device 15 arranged in the pipeline 20 or, as an alternative to conduit inlet 7, if containing an analyzing device 15, so that the homogenized flow in particular reaches the analyzing device 15 resulting in a more reliable analysis of the contents of the fluid flowing in the pipeline 20.

The eductor 3 and possibly the pump 2 and/or conduits 6 and 11 may be provided as a kit intended to be mounted in or on a pipeline 20 to perform the method according to the invention.

Figure 4 shows an alternative embodiment of the system 1 of Figures 1-3. Same parts of the system 1 are indicated by the same reference numerals. Main difference between the embodiment of Figures 1-3 and the alternative embodiment of Figure 4 is the outflow direction of the eductor 10.

In the embodiment of Figure 4, the outlet 10 of the eductor 3 is arranged in the pipeline 20 such that an outflow direction of the eductor is arranged at least partially opposite to the main flow direction in the pipeline. This has the result that the mixture of injection fluid entering the eductor via pressure inlet 8 and fluid sucked in from a bottom region 12 of the pipeline into the eductor 3 ejected from the outlet enters the pipeline in a direction at least partially opposite to the direction of the main flow MF in the pipeline.

This opposite direction promotes the turbulent mixing of this ejected mixture with the fluid flows in the pipeline 20 resulting in homogenization of the fluid flows in the pipeline.

Hereinabove two sub-flows LSF, HSF have been used to describe an uneven distribution over the cross section of the fluid flow in the pipeline. In practice the fluid flow in the pipeline will not necessarily have two distinct sub-flows in the pipeline. The method and system according to the invention may however be used to temporarily homogenize any uneven distribution of contents of the fluid flow over the cross section of the fluid flow.

In the drawings an analyzing device 15 arranged in the pipeline 20 is shown. As an alternative, an analyzing device may be arranged outside the pipeline 20 and connected to the pipeline 15 by a conduit, for instance the conduit 6. Such analyzing device 15a connected to conduit 6 is indicated in Figures 1 and 4 by a dashed lines. In such case the fluid entering the conduit inlet 7 will be used to analyze the composition of the fluid.

## Claims

1. A method to analyze a fluid flow or to take a sample in a pipeline (20) comprising at least temporarily homogenizing the fluid flow, wherein the method comprises the step of feeding an injection fluid in the fluid flow, using an eductor (3), wherein the eductor is arranged in the pipeline, wherein the eductor comprises a pressure inlet (8), a suction inlet (9), and an outlet (10), wherein the eductor is a pump device which uses the Venturi effect to draw liquid into the eductor via the suction inlet by the energy of a pressurized fluid flow through the eductor from the pressure inlet to the outlet, wherein the pressure inlet is connected to a source of pressurized injection fluid, wherein the suction inlet is arranged in a bottom region (12) of the pipeline to suck in liquid from the bottom region, and wherein the outlet is arranged in the pipeline to discharge a mixture of at least the injection fluid and fluid from the bottom region of the pipeline into the pipeline, wherein the step of feeding injection fluid into the pipeline comprises feeding pressurized injection fluid to the eductor, mixing the injection fluid with fluid sucked in from the bottom region of the pipeline and discharging the mixture into the pipeline to homogenize the fluid flow in the pipeline **characterized in that** the outlet (10) of the eductor (3) is arranged in the pipeline (20) such that an outflow direction of a fluid from the outlet is arranged at least partially parallel to a direction of the main flow in the pipeline, and that the outflow direction of the outlet is substantially directed to an analyzing device (15) arranged in the pipeline, or substantially directed to a conduit inlet arranged in the pipeline of a conduit fluidly connected to an analyzing device, or substantially directed to a location to take the sample.

2. The method of claim 1, wherein the eductor (3) is arranged in the bottom region (12) of the pipeline (20).

3. The method of any of the preceding claims, wherein the injection fluid and the liquid from the bottom region (12) of the pipeline (20) are further mixed in the eductor (3) by one or more additional mixing devices (13, 14), wherein at least one additional mixing device (13, 14) is preferably arranged in or close to the outlet of the eductor.

4. The method of any of the preceding claims, wherein the pressurized injection-fluid is obtained by taking fluid from the pipeline (20), and pressurizing the fluid by a pump (2).

5. The method of any of the preceding claims, wherein the main flow of the pipeline (20) comprises at least a first fluid flow in the bottom region (12) of the pipeline and a second fluid flow in a region above the first fluid flow of the pipeline, wherein a density of the first fluid flow is larger than a density of the second fluid flow, and wherein the suction inlet (9) is arranged to suck in fluid mainly from the first fluid flow.

6. The method of any of the preceding claims, wherein a longitudinal axis of the suction inlet (9) is arranged at an angle (A) with a longitudinal axis of the outlet (10), wherein the angle is smaller than 40 degrees, preferably in the range of 0 to 20 degrees.

7. The method of any of the preceding claims, wherein a surface area of a smallest cross section of the eductor (3) is maximally 60%, for example about 50% of a surface area of the cross section of the outlet (10) of the eductor.

8. A system to analyze a fluid flow or to take a sample in a pipeline (20), comprising:
- a source of pressurized injection fluid (2) to provide a pressurized injection fluid, and
- a device connected to the source of pressurized injection fluid, wherein the device is arranged to feed the pressurized injection fluid into the pipeline to at least temporarily homogenize the fluid flow, and
- an analyzing device (15) configured to analyze the fluid flow in the pipeline, wherein the device comprises an eductor (3) comprising a pressure inlet (8), a suction inlet (9), and an outlet (10), wherein the eductor is a pump device which uses the Venturi effect to draw liquid into the eductor via the suction inlet by the energy of a pressurized fluid flow through the eductor from the pressure inlet to the outlet, wherein the pressure inlet is connected to the source of pressurized injection fluid, wherein the suction inlet is arranged in a bottom region (12) of the pipeline to suck in liquid from the bottom region, and wherein the outlet is arranged in the pipeline to discharge a mixture of at least the injection fluid and fluid from the bottom region of the pipeline into the pipeline, **characterized in that** the outlet (10) of the eductor (3) is arranged in the pipeline (20) such that an outflow direction of a fluid from the outlet is arranged at least partially parallel to a direction of the main flow in the pipeline, and that the outflow direction of the outlet is substantially directed to an analyzing device (15) arranged in the pipeline, substantially directed to a conduit inlet arranged in the pipeline of a conduit fluidly connected to an analyzing device or substantially directed to a location to take the sample.

9. The system of claim 8, wherein the eductor (3) comprises an additional mixing device (13, 14), wherein the additional mixing device (13, 14) is preferably arranged in or close to the outlet of the eductor.

10. The system of any of the claims 8 or 9, wherein a longitudinal axis of the suction inlet (9) is arranged at an angle with a longitudinal axis of the outlet (10), wherein the angle Is smaller than 40 degrees, preferably in the range of 0 to 20 degrees.

11. The system of any of the claims 8-10, wherein a surface area of a smallest cross section of the eductor (3) is maximally 60%, for example about 50% of a surface area of the cross section of the outlet (10) of the eductor.

12. The system of any of the claims 8-11, wherein the system is intended to perform the method of any of the claims 1-7.

## Patentansprüche

1. Verfahren, um einen Fluidstrom zu analysieren oder eine Probe zu entnehmen in einer Rohrleitung (20), umfassend ein zumindest zeitweises Homogenisieren des Fluidstroms, wobei das Verfahren den Schritt eines Einführens eines Einspritzfluids in den Fluidstrom unter Verwendung einer Verteilerdüse (3) umfasst, wobei die Verteilerdüse in der Rohrleitung angeordnet ist, wobei die Verteilerdüse einen Druckeinlass (8), einen Ansaugeinlass (9) und einen Auslass (10) umfasst, wobei die Verteilerdüse eine Pumpenvorrichtung ist, welche den Venturi-Effekt einsetzt, um Flüssigkeit über den Ansaugeinlass durch die Energie eines unter Druck stehenden Fluidstroms durch die Verteilerdüse von dem Druckeinlass zu dem Auslass in die Verteilerdüse zu ziehen, wobei der Druckeinlass mit einer Quelle eines unter Druck stehenden Einspritzfluids verbunden ist, wobei der Ansaugeinlass in einem Bodenbereich (12) der Rohrleitung angeordnet ist, um eine Flüssigkeit von dem Bodenbereich anzusaugen, und wobei der Auslass in der Rohrleitung angeordnet ist, um ein Gemisch von zumindest dem Einspritzfluid und einem Fluid von dem Bodenbereich der Rohrleitung in die Rohrleitung zu entladen,
wobei der Schritt des Einführens des Einspritzfluids in die Rohrleitung ein Einführen eines unter Druck stehenden Einspritzfluids zu der Verteilerdüse, ein Mischen des Einspritzfluids mit dem Fluid, welches von dem Bodenbereich der Rohrleitung angesaugt wird, und ein Entladen des Gemisches in die Rohrleitung, um den Fluidstrom in der Rohrleitung zu homogenisieren, umfasst, **dadurch gekennzeichnet, dass** der Auslass (10) der Verteilerdüse (3) in der Rohrleitung (20) angeordnet ist, so dass eine Abflussrichtung eines Fluids von dem Auslass zumindest teilweise parallel zu einer Richtung des Hauptstroms in der Rohrleitung angeordnet ist, und dass die Abflussrichtung des Auslasses im Wesentlichen auf eine Analysevorrichtung (15) gerichtet ist, welche in der Rohrleitung angeordnet ist, oder im Wesentlichen auf einen in der Rohrleitung angeordneten Leitungseinlass einer Leitung gerichtet ist, welche strömungstechnisch mit einer Analysevorrichtung verbunden ist, oder im Wesentlichen auf eine Stelle gerichtet ist, um die Probe zu entnehmen.

2. Verfahren nach Anspruch 1, wobei die Verteilerdüse (3) in dem Bodenbereich (12) der Rohrleitung (20) angeordnet ist.

3. Verfahren nach einem der vorhergehenden Ansprüche, wobei das Einspritzfluid und die Flüssigkeit von dem Bodenbereich (12) der Rohrleitung (20) weiter in der Verteilerdüse (3) durch eine oder mehrere zusätzliche Mischvorrichtungen (13, 14) gemischt werden, wobei die mindestens eine zusätzliche Mischvorrichtung (13, 14) vorzugsweise in oder dicht bei dem Auslass der Verteilerdüse angeordnet ist.

4. Verfahren nach einem der vorhergehenden Ansprüche, wobei das unter Druck stehende Einspritzfluid erhalten wird, indem ein Fluid von der Rohrleitung (20) entnommen wird und das Fluid durch eine Pumpe (2) unter Druck gesetzt wird.

5. Verfahren nach einem der vorhergehenden Ansprüche, wobei der Hauptstrom der Rohrleitung (20) mindestens einen ersten Fluidstrom in dem Bodenbereich (12) der Rohrleitung und einen zweiten Fluidstrom in einem Bereich oberhalb des ersten Fluidstroms der Rohrleitung umfasst, wobei eine Dichte des ersten Fluidstroms größer als eine Dichte des zweiten Fluidstrom ist, und wobei der Ansaugeinlass (9) angeordnet ist, um ein Fluid im Wesentlichen von dem ersten Fluidstrom anzusaugen.

6. Verfahren nach einem der vorhergehenden Ansprüche, wobei eine Längsachse des Ansaugeinlasses (9) in einem Winkel (A) zu einer Längsachse des Auslasses (10) angeordnet ist, wobei der Winkel kleiner als 40 Grad, vorzugsweise in dem Bereich von 0 bis 20 Grad, ist.

7. Verfahren nach einem der vorhergehenden Ansprüche, wobei eine Fläche eines kleinsten Querschnitts der Verteilerdüse (3) maximal 60 %, beispielsweise ungefähr 50 %, einer Fläche des Querschnitts des Auslasses (10) der Verteilerdüse beträgt.

8. System, um einen Fluidstrom zu analysieren oder um eine Probe zu entnehmen in einer Rohrleitung (20), umfassend:
- eine Quelle eines unter Druck stehenden Einspritzfluids (2), um ein unter Druck stehendes Einspritzfluid bereitzustellen, und
- eine Vorrichtung, welche mit der Quelle des unter Druck stehenden Einspritzfluids verbunden ist, wobei die Vorrichtung angeordnet ist, um das unter Druck stehende Einspritzfluid in die Rohrleitung einzuführen, um zumindest zeitweise den Fluidstrom zu homogenisieren, und
- eine Analysevorrichtung (15), welche ausgestaltet ist, um den Fluidstrom in der Rohrleitung zu analysieren,
wobei die Vorrichtung eine Verteilerdüse (3) umfasst, welche einen Druckeinlass (8), einen Ansaugeinlass (9) und einen Auslass (10) umfasst, wobei die Verteilerdüse eine Pumpenvorrichtung ist, welche den Venturi-Effekt einsetzt, um eine Flüssigkeit über den Ansaugeinlass durch die Energie eines unter Druck stehenden Fluidstroms durch die Verteilerdüse von dem Druckeinlass zu dem Auslass in die Verteilerdüse zu ziehen, wobei der Druckeinlass mit der Quelle des unter Druck stehenden Einspritzfluids verbunden ist, wobei der Ansaugeinlass in einem Bodenbereich (12) der Rohrleitung angeordnet ist, um eine Flüssigkeit von dem Bodenbereich anzusaugen, und wobei der Auslass in der Rohrleitung angeordnet ist, um ein Gemisch von mindestens dem Einspritzfluid und einem Fluid von dem Bodenbereich der Rohrleitung in die Rohrleitung zu entladen, **dadurch gekennzeichnet, dass** der Auslass (10) der Verteilerdüse (3) in der Rohrleitung (20) angeordnet ist, so dass eine Abflussrichtung eines Fluids von dem Auslass zumindest teilweise parallel zu einer Richtung des Hauptstroms in der Rohrleitung angeordnet ist, und dass die Abflussrichtung des Auslasses im Wesentlichen auf eine Analysevorrichtung (15) gerichtet ist, welche in der Rohrleitung angeordnet ist, im Wesentlichen auf einen in der Rohrleitung angeordneten Leitungseinlass einer Leitung gerichtet ist, welche strömungstechnisch mit einer Analysevorrichtung verbunden ist, oder im Wesentlichen auf eine Stelle gerichtet ist, um die Probe zu entnehmen.

9. System nach Anspruch 8, wobei die Verteilerdüse (3) eine zusätzliche Mischvorrichtung (13, 14) umfasst, wobei die zusätzliche Mischvorrichtung (13, 14) vorzugsweise in oder dicht bei dem Auslass der Verteilerdüse angeordnet ist.

10. System nach einem der Ansprüche 8 oder 9, wobei eine Längsachse des Ansaugeinlasses (9) mit einem Winkel zu einer Längsachse des Auslasses (10) angeordnet ist, wobei der Winkel kleiner als 40 Grad, vorzugsweise in dem Bereich von 0 bis 20 Grad, ist.

11. System nach einem der Ansprüche 8-10, wobei eine Fläche eines kleinsten Querschnitts der Verteilerdüse (3) maximal 60 %, zum Beispiel ungefähr 50 %, einer Fläche des Querschnitts des Auslasses (10) der Verteilerdüse beträgt.

12. System nach einem der Ansprüche 8-11, wobei das System ausgelegt ist, um das Verfahren nach einem der Ansprüche 1-7 auszuführen.

## Revendications

1. Procédé pour analyser un écoulement de fluide ou pour prélever un échantillon dans un pipeline (20), comprenant l'homogénéisation au moins temporaire de l'écoulement de fluide, dans lequel le procédé comprend l'étape de fourniture d'un fluide d'injection dans l'écoulement de fluide, en utilisant un éjecteur (3), dans lequel l'éjecteur est agencé dans le pipeline, dans lequel l'éjecteur comprend un orifice d'entrée de pression (8), un orifice d'entrée d'aspiration (9), et un orifice de sortie (10), dans lequel l'éjecteur est un dispositif de pompe qui utilise l'effet Venturi pour aspirer un liquide dans l'éjecteur par l'intermédiaire de l'orifice d'entrée d'aspiration par l'énergie d'un écoulement de fluide sous pression à travers l'éjecteur de l'orifice d'entrée de pression à l'orifice de sortie, dans lequel l'orifice d'entrée de pression est relié à une source de fluide d'injection sous pression, dans lequel l'orifice d'entrée d'aspiration est agencé dans une région inférieure (12) du pipeline pour aspirer un liquide à partir de la région inférieure, et dans lequel l'orifice de sortie est agencé dans le pipeline pour décharger un mélange d'au moins le fluide d'injection et du fluide provenant de la région inférieure du pipeline dans le pipeline,
dans lequel l'étape de fourniture d'un fluide d'injection dans le pipeline comprend la fourniture d'un fluide d'injection sous pression à l'éjecteur, le mélange du fluide d'injection avec un fluide aspiré à partir de la région inférieure du pipeline, et la décharge du mélange dans le pipeline pour homogénéiser l'écoulement de fluide dans le pipeline, **caractérisé en ce que** l'orifice de sortie (10) de l'éjecteur (3) est agencé dans le pipeline (20) de sorte qu'une direction d'écoulement de sortie d'un fluide à partir de l'orifice de sortie soit agencée au moins partiellement parallèlement à une direction de l'écoulement principal dans le pipeline, et **en ce que** la direction d'écoulement de sortie de l'orifice de sortie est sensiblement dirigée vers un dispositif d'analyse (15) agencé dans le pipeline, ou sensiblement dirigée vers un orifice d'entrée de conduit agencé dans le pipeline d'un conduit relié fluidiquement à un dispositif d'analyse, ou dirigée sensiblement vers un emplacement pour prélever l'échantillon.

2. Procédé selon la revendication 1, dans lequel l'éjecteur (3) est agencé dans la région inférieure (12) du pipeline (20).

3. Procédé selon l'une quelconque des revendications précédentes, dans lequel le fluide d'injection et le liquide provenant de la région inférieure (12) du pipeline (20) sont en outre mélangés dans l'éjecteur (3) par un ou plusieurs dispositifs de mélange (13, 14) supplémentaires, dans lequel au moins un dispositif de mélange (13, 14) supplémentaire est de préférence agencé dans l'orifice de sortie de l'éjecteur ou à proximité de celui-ci.

4. Procédé selon l'une quelconque des revendications précédentes, dans lequel le fluide d'injection sous pression est obtenu en prélevant un fluide dans le pipeline (20), et en mettant le fluide sous pression par une pompe (2).

5. Procédé selon l'une quelconque des revendications précédentes, dans lequel l'écoulement principal du pipeline (20) comprend au moins un premier écoulement de fluide dans la région inférieure (12) du pipeline et un deuxième écoulement de fluide dans une région au-dessus du premier écoulement de fluide du pipeline, dans lequel une densité du premier écoulement de fluide est supérieure à une densité du deuxième écoulement de fluide, et dans lequel l'orifice d'entrée d'aspiration (9) est agencé pour aspirer un fluide principalement à partir du premier écoulement de fluide.

6. Procédé selon l'une quelconque des revendications précédentes, dans lequel un axe longitudinal de l'orifice d'entrée d'aspiration (9) est agencé selon un angle (A) par rapport à un axe longitudinal de l'orifice de sortie (10), dans lequel l'angle est inférieur à 40 degrés, de préférence dans la plage de 0 à 20 degrés.

7. Procédé selon l'une quelconque des revendications précédentes, dans lequel une aire de surface d'une section transversale la plus petite de l'éjecteur (3) représente au maximum 60 %, par exemple environ 50 % d'une aire de surface de la section transversale de l'orifice de sortie (10) de l'éjecteur.

8. Système pour analyser un écoulement de fluide ou pour prélever un échantillon dans un pipeline (20), comprenant :
- une source de fluide d'injection sous pression (2) pour fournir un fluide d'injection sous pression, et
- un dispositif relié à la source de fluide d'injection sous pression, dans lequel le dispositif est agencé pour fournir le fluide d'injection sous pression dans le pipeline pour homogénéiser au moins temporairement l'écoulement de fluide, et
- un dispositif d'analyse (15) configuré pour analyser l'écoulement de fluide dans le pipeline,
dans lequel le dispositif comprend un éjecteur (3) comprenant un orifice d'entrée de pression (8), un orifice d'entrée d'aspiration (9), et un orifice de sortie (10), dans lequel l'éjecteur est un dispositif de pompe qui utilise l'effet Venturi pour aspirer un liquide dans l'éjecteur par l'intermédiaire de l'orifice d'entrée d'aspiration par l'énergie d'un écoulement de fluide sous pression à travers l'éjecteur de l'orifice d'entrée de pression à l'orifice de sortie, dans lequel l'orifice d'entrée de pression est relié à la source de fluide d'injection sous pression, dans lequel l'orifice d'entrée d'aspiration est agencé dans une région inférieure (12) du pipeline pour aspirer un liquide à partir de la région inférieure, et dans lequel l'orifice de sortie est agencé dans le pipeline pour décharger un mélange d'au moins le fluide d'injection et du fluide provenant de la région inférieure du pipeline dans le pipeline, **caractérisé en ce que** l'orifice de sortie (10) de l'éjecteur (3) est agencé dans le pipeline (20) de sorte qu'une direction d'écoulement de sortie d'un fluide à partir de l'orifice de sortie soit agencée au moins partiellement parallèlement à une direction de l'écoulement principal dans le pipeline, et **en ce que** la direction d'écoulement de sortie de l'orifice de sortie est sensiblement dirigée vers un dispositif d'analyse (15) agencé dans le pipeline, sensiblement dirigée vers un orifice d'entrée de conduit agencé dans le pipeline d'un conduit relié fluidiquement à un dispositif d'analyse ou dirigée sensiblement vers un emplacement pour prélever l'échantillon.

9. Système selon la revendication 8, dans lequel l'éjecteur (3) comprend un dispositif de mélange (13, 14) supplémentaire, dans lequel le dispositif de mélange (13, 14) supplémentaire est de préférence agencé dans l'orifice de sortie de l'éjecteur ou à proximité de celui-ci.

10. Système selon l'une quelconque des revendications 8 et 9, dans lequel un axe longitudinal de l'orifice d'entrée d'aspiration (9) est agencé selon un angle par rapport à un axe longitudinal de l'orifice de sortie (10), dans lequel l'angle est inférieur à 40 degrés, de préférence dans la plage de 0 à 20 degrés.

11. Système selon l'une quelconque des revendications 8 à 10, dans lequel une aire de surface d'une section transversale la plus petite de l'éjecteur (3) représente au maximum 60 %, par exemple environ 50 % d'une aire de surface de la section transversale de l'orifice de sortie (10) de l'éjecteur.

12. Système selon l'une quelconque des revendications 8 à 11, dans lequel le système est destiné à exécuter le procédé selon l'une quelconque des revendications 1 à 7.
